# EUROPEAN PATENT APPLICATION

(11) **EP 3 217 734 A1**
(43) Date of publication of application: **13.09.2017**
(21) Application number: 17156177.2
(22) Date of filing: 15.02.2017
(51) Int. Cl.: H04W 56/00, G08G 1/16, H04L 29/08

(54) **WIRELESS DEVICE, COMMUNICATION METHOD AND COMPUTER READABLE STORAGE MEDIUM**

(30) Priority: 11.03.2016 JP 2016048799
(71) Applicant: Kabushiki Kaisha Toshiba, Minato-ku, Tokyo (JP)
(72) Inventor: KASAMI, Hideo, Minato-ku, Tokyo (JP)
(74) Representative: Noble, Nicholas

(57) **Abstract**

According to one embodiment, a wireless device provided in a traveling apparatus, includes a processor configured to evaluate accuracy of time synchronization in the traveling apparatus and a transmitter configured to transmit a frame including information on the traveling apparatus at a first frequency when the accuracy corresponds to a first quality and transmit the frame at a second frequency higher than the first frequency when the accuracy corresponds to a second quality lower than the first quality.

## Description

### FIELD

Embodiments relate to a wireless device, a communication method, and a computer readable storage medium.

### BACKGROUND

A mechanism of repeatedly broadcasting own vehicle information to the surrounding vehicles is defined in CAM (Cooperative Awareness Message) in ETSI (European Telecommunications Standards Institute) standard related to ITS (Intelligent Transport Systems).

As for an operation support technique for a receiving-side vehicle, it is known to determine and display ellipse shapes that indicate an error range of transmitting-side vehicle positions utilizing position accuracy information based on vehicle information received from the transmitting-side vehicles.

Each vehicle performs time synchronization based on a GPS (Global Positioning System) signal including time (i.e., time point). Therefore, in an environment with a bad GPS-signal receiving condition, quality (time accuracy) of time synchronization is degraded, which leads to lowered accuracy of an estimated position. According to ETSI standard, the frequency of CAM transmission is basically determined based on a vehicle speed or a vehicle travel amount, and the higher the vehicle speed, the higher the frequency of transmission, for example.

A case is, for example, supposed where vehicles (high-speed vehicles) at high speeds and vehicles (low-speed vehicles) at low speeds are passing through a crossing (or intermingle), with a bad GPS-signal receiving condition for the low-speed vehicles. In this case, since time synchronization accuracy and position estimation accuracy are lowered for the low-speed vehicles, the surrounding vehicles cannot detect the status of the low-speed vehicles (for example, the positions of the low-speed vehicles) at high accuracy, which could cause a problem in terms of safe operation support.

### BRIEF DESCRIPTION OF THE DRAWINGS

FIG. 1 shows an example of a wireless device according to the present embodiment;
FIG. 2 shows an example of a wireless system according to the present embodiment;
FIG. 3 shows an example of a notification frame format according to the present embodiment;
FIG. 4 shows an operation flowchart of the wireless device of FIG. 1;
FIG. 5 shows an example of a notification frame transmission timing;
FIG. 6 illustrates how notification frames are transmitted at a crossing according to the present embodiment; and
FIG. 7 illustrates how notification frames are transmitted at a crossing according to related art.

### DETAILED DESCRIPTION

According to one embodiment, a wireless device provided in a traveling apparatus, includes a processor configured to evaluate accuracy of time synchronization in the traveling apparatus; and a transmitter configured to transmit a frame including information on the traveling apparatus at a first frequency when the accuracy corresponds to a first quality and transmit the frame at a second frequency higher than the first frequency when the accuracy corresponds to a second quality lower than the first quality.

Embodiments will now be explained with reference to the accompanying drawings.

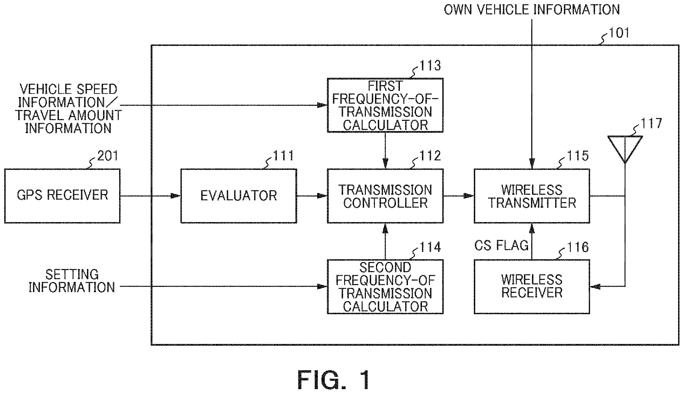

FIG. 1 shows a wireless device 101 according to an embodiment. The wireless device 101 is provided with an evaluator 111, a transmission controller 112, a first frequency-of-transmission calculator 113, a second frequency-of-transmission calculator 114, a wireless transmitter 115, a wireless receiver 116, and an antenna 117. The wireless device 101 is mounted in a vehicle that is a traveling apparatus.

The GPS receiver 201 receives a GPS (Global Positioning System) signal or other equivalent information transmitted from a satellite, to perform processes such as time synchronization, position estimation, and estimated accuracy. For the time synchronization, the GPS receiver 201 synchronizes internally-managed clock time with satellite time included in the GPS signal. Therefore, as the GPS-signal reception environment gets worse and the period of a degraded state of GPS-signal reception continues longer, the clock synchronization accuracy is lowered, which leads to lowered position estimated accuracy. The GPS receiver 201 is mounted in a vehicle that is a traveling apparatus.

The GPS receiver 201 outputs GPS information to the wireless device 101 autonomously or when requested. The GPS information includes information, such as, received GPS-signal strength, GPS-receiver time (current time), an estimated position, and estimated accuracy, as an example. In the case of a GPS receiver compatible with NMEA (National Marine Electronics Association)-0183 format, an message output by the GPS receiver corresponds to the GPS information. Examples of the message are a GGA message, a GSA message, and a GST message, etc.

The GGA message is a general message indicating positioning. The GSA message is a message related to status information of GPS satellites, which includes information related only to satellites having been used for positon calculation. The GST message is a message related to items for statistical errors of a measured position.

The evaluator 111 evaluates time synchronization accuracy in the GPS receiver 201 based on the GPS information output from the GPS receiver 201. The time synchronization is synchronization between internal time of the GPS receiver 201 or the wireless device 101 and satellite time included in the GPS signal.

As an example, the evaluator 111 evaluates the time synchronization accuracy based on radio field strength of a GPS signal received by the GPS receiver 201. For example, the time synchronization accuracy is evaluated to be a normal state (normal quality) if the radio field strength (received strength) is equal to or greater than a threshold value, whereas evaluated to be a degraded state (a degraded quality) if the radio field strength is smaller than the threshold value. For example, the normal quality (the normal state) corresponds to a first quality (a first state), and the degraded quality (the degraded state) corresponds to a second quality (second state).

Also, the time synchronization accuracy may also be evaluated using information included in each message descried above. Several examples are shown below.
(1) Quality of position data included in the GGA message (for example, a value in the range from 0 to 9).
(2) A loss time period of correction data included in the GGA message. In the case of a mobile station, position estimated accuracy is lowered if correction data loss continues when position estimation is performed using a received GPS wave and received correction data (transmitted by a middle-wave radio beacon managed by JAPAN Coast Guard in Japan).
(3) PDOP (Position Dilution of Precision) included in the GSA message. PDOP indicates a degradation level of position accuracy of satellites used for position calculation, having a value, for example, in the range from 1. 0 to 9. 9, the lower the value, the higher the accuracy.
(4) GDOP (Geometrical Dilution of Precision) included in the GSA message. GDOP corresponds to a horizontal component of PDOP.
(5) VDOP (Vertical Dilution of Precision) included in the GSA message. VDOP corresponds to a vertical component of GDOP.
(6) Major- and minor-axis standard deviation of an error ellipse included in the GST message, the error ellipse representing an error range of a GPS-measured position.
(7) Standard deviation of latitude, longitude and height included in the GST message.

The quality of time synchronization accuracy can be evaluated by comparing information included in the above each message with a threshold value.

The evaluator 111 outputs a first value when a normal state is determined, whereas a second value when a degraded state is determined, as an evaluation value of time synchronization accuracy. The evaluator 111 may output an evaluation value (i.e., a first value or a second value) whenever performing evaluation. Only when the evaluation value is changed, the evaluator 111 may output the changed evaluation value. The evaluation may be performed at regular intervals. The evaluation interval may be arbitrarily decided. Moreover, the evaluator 111 may perform evaluation when receiving a request from the transmission controller 112.

The first frequency-of-transmission calculator 113 receives vehicle speed information from an engine control unit (ECU).

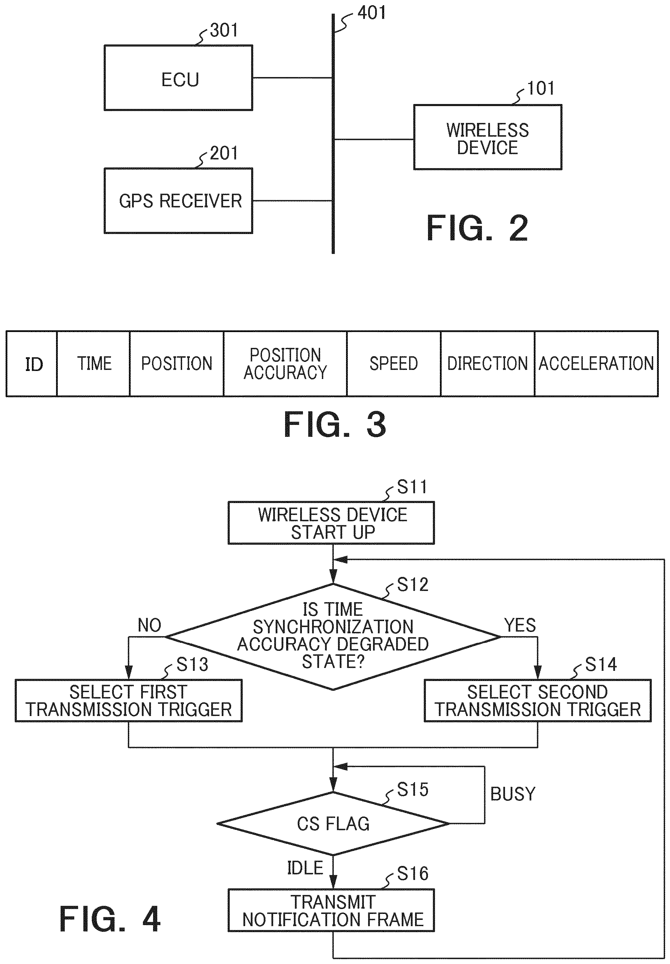

FIG. 2 shows an example of a wireless system having the wireless device 101, an ECU 301, and the GPS receiver 201. The wireless device 101, the ECU 301, and the GPS receiver 201 are connected to one another via a bus that is a network 401. The first frequency-of-transmission calculator 113 of the wireless device 101 receives vehicle speed information from the ECU 301 via the bus 401. A memory may be connected to the bus 401. The wireless device 101 may read information from and write information to the memory.

The first frequency-of-transmission calculator 113 calculates a frequency of transmission of a notification frame that includes own vehicle information, based on the vehicle speed information. The notification frame may be called a beacon frame, a broadcast frame or an announcement frame etc. The first frequency-of-transmission calculator 113 generates and outputs a first transmission trigger at the calculated frequency of transmission. As the vehicle speed becomes higher, the frequency of transmission is calculated to be lower, that is, an output interval of the first transmission triggers becomes longer. For example, the output interval of transmission triggers is a 1-sec interval at 10 km per hour or a 100-milisec interval at 100 km per hour.

The first frequency-of-transmission calculator 113 may receive vehicle travel amount information instead of the vehicle speed information. The vehicle travel amount is calculated, for example, by detecting the number of tire rotation. The starting point of travel amount calculation may be a moment at which previous travel amount information is output or another predetermined moment. When the travel amount information is used, the first frequency-of-transmission calculator 113 outputs a first transmission trigger, for example, whenever it is detected that the travel amount increases by a fixed amount. Or, the first frequency-of-transmission calculator 113 outputs the first transmission trigger whenever the travel amount reaches each of a plurality of predetermined values. The interval between the predetermined values can be arbitrarily determined.

The second frequency-of-transmission calculator 114 acquires setting information from the ECU 301 that is an upper layer via an external interface and, based on the setting information, calculates a frequency of transmission of notification frames that include own vehicle information. The second frequency-of-transmission calculator 114 generates and outputs a second transmission trigger at the calculated frequency of transmission. The setting information, for example, includes information for instructing an output interval of second transmission triggers. In this case, the second frequency-of-transmission calculator 114 outputs the second transmission trigger at an interval specified by the setting information. For a setting range of the interval of the second transmission triggers, for example, a parameter T_GenCam_ App defined by ETSI-standard CAM may be used. The output interval of the second transmission triggers may be expressed by a difference from the output interval of the first trigger. In this case, the setting information includes information on the difference. For example, when the output interval of the second transmission triggers is set to be shorter by 50 milliseconds than the output interval of the first transmission triggers, the setting information is configured like "- 50 milliseconds.

In the present embodiment, the frequency of outputting the second transmission triggers is higher than the frequency of outputting the first transmission triggers. In other words, the output interval of the second transmission triggers is shorter than the output interval of the first transmission triggers.

As an example, if the setting range (a range determined by a lower limit and an upper limit) of the interval of the first transmission triggers is from A1 to A2, the setting range of the interval of the second transmission triggers may be from B1 to B2 (B2 being smaller than A1, or equal to or smaller than A1).

The setting range of the interval of the first transmission triggers and the setting range the interval of of the second transmission triggers may be equal to or partially overlap with each other. In this case, in accordance with the setting range the interval of the first transmission triggers, the setting range the interval of the second transmission triggers may be dynamically adjusted. For example, when the output interval of the first transmission triggers is 500 milliseconds, the output interval of the second transmission triggers is set to 300 milliseconds. Or, when the output interval of the first transmission triggers is 250 milliseconds, the output interval of the second transmission triggers is set to 100 milliseconds. In this case, the second frequency-of-transmission calculator 114 may acquire information that indicates the output interval of the first transmission triggers from the first frequency-of-transmission calculator 113 or the transmission controller 112 and determine an interval shorter than the acquired information as the output interval of the second transmission triggers. Moreover, the second frequency-of-transmission calculator 114 may acquire the vehicle speed information or travel amount information and calculate the output interval of the first transmission triggers based on the acquired information.

When the setting ranges of the intervals of the first and second transmission triggers are equal to each other and the output interval of the first transmission triggers reaches a lower limit, the output interval of the second transmission triggers is set to a lower limit. For example, supposed is a case that the setting range of both of the first and second transmission triggers is from 100 milliseconds to 1 second. In this case, if the output interval of the first transmission triggers is 100 milliseconds, the output interval of the second transmission triggers is also set to 100 milliseconds.

A correspondence table between the output intervals of the first and second transmission triggers may be stored in the second frequency-of-transmission calculator 114 or an accessible memory. In this case, based on the correspondence table, the output interval of the second transmission triggers may be specified from the output interval of the first transmission triggers.

If the value received immediately before from the evaluator 111 is a first value (while the time synchronization accuracy is in the normal state), the transmission controller 112 selects the first transmission trigger input from the first frequency-of-transmission calculator 113. If the value received immediately before is a second value (while the time synchronization accuracy is in the degraded state), the transmission controller 112 selects the second transmission trigger.

Whenever selecting the first or the second transmission trigger, the transmission controller 112 outputs a transmission instruction signal to the wireless transmitter 115.

Based on a signal received from the antenna 117, the wireless receiver 116 performs carrier sensing on a wireless medium. The wireless receiver 116 outputs a signal of a carrier sense flag (a CS flag), which represents a result of carrier sensing, to the wireless transmitter 115.

If a received power of the signal received via the antenna 117 is smaller than a threshold value, the wireless receiver 116 outputs a signal (a CS flag), which indicates an idle state of carrier, to the wireless transmitter 115. If the received power of the received signal is equal to or greater than the threshold value, the wireless receiver 116 outputs a signal (a CS flag) that indicates a busy state of carrier.

When receiving a carrier-sensing instruction signal from the wireless transmitter 115, the wireless receiver 116 performs carrier sensing to output a CS flag. Or, the wireless receiver 116 may perform carrier sensing at regular intervals to output a CS flag to the wireless transmitter 115.

The wireless transmitter 115 acquires own vehicle information from the ECU 301 to generate a notification frame that includes the own vehicle information. The ECU 301 generates the own vehicle information using GPS information and other sensors or the like. When receiving the transmission instruction signal from the transmission controller 112, the wireless transmitter 115 checks the status of a wireless medium using the CS flag and transmits the notification frame via the antenna 117 when the CS flag indicates the idle state of carrier. In more detail, after modulating and encoding the notification frame that is a digital signal, the wireless transmitter 115 converts the modulated and encoded notification frame into an analog signal by DA (Digital-to-Analog) conversion, also performs bandwidth adjustment in accordance with a communication scheme to be used, frequency conversion to a radio frequency, amplification, etc., to generate a wireless signal, and then transmits the wireless signal via the antenna 117. When receiving the transmission instruction signal, the wireless transmitter 115 instructs the wireless receiver 116 to perform carrier sensing to acquire the CS flag. The wireless transmitter 115 may perform carrier sensing at regular intervals and output the CS flag to the wireless receiver 116. The wireless transmitter 115 may have a buffer for temporarily storing own vehicle information and the notification frame.

There is no specific limitation on the communication scheme of the wireless device 101. One example is IEEE802. 11p that is a wireless LAN (Local Area Network) standard.

Each internal component of the wireless device 101 can be configured with any circuit such as a processor or an integrated circuit. Each internal component may have a buffer for storing information, as required. The buffer can be configured with a hardware storage such as a memory.

FIG. 3 shows a format example of a notification frame. The notification frame includes vehicle unique ID, time information, position information, position accuracy information, speed information, direction information, and acceleration information. Several pieces of information included in own vehicle information may be used as those pieces of information. Part of the information may be acquired from the GPS information.

Used as the vehicle unique ID is, for example, an ISO vehicle identification number VIN, a world manufacturer identifier WMI, a vehicle descriptor section VDS, a vehicle identifier section VIS, a vehicle serial number, etc. The position accuracy information indicates a position error range. As the position accuracy information, several kinds of standard deviation included in the GST message may be used. In a state where a GPS signal cannot be received, position information may be estimated from speed, direction, acceleration, internal time (GPS receiver time), etc. In this case, the position accuracy information can be calculated with any method. For example, as the speed increases, a value of the position accuracy information may be set to be larger. As for the accuracy of each information, for example, the following may be set: 100 milliseconds for the time information accuracy; 1 meter for the position information accuracy; 10 cm/sec for the speed information accuracy; and 10 degrees for the direction information accuracy.

FIG. 4 shows an operation flowchart of the wireless device 101.

When the wireless device 101 starts up (step S11), a connection process between the GPS receiver 201 and the ECU 301 is performed. Through this process, the wireless device 101 can receive GPS information from the GPS receiver 201 and also vehicle speed information (or travel amount information), setting information, and own vehicle information from the ECU 301.

The evaluator 111 evaluates the time synchronization accuracy to evaluate whether the accuracy is in the normal or the degraded state (step S12). To the transmission controller 112, the first transmission triggers are intermittently input from the first frequency-of-transmission calculator 113 and the second transmission triggers are intermittently input from the second frequency-of-transmission calculator 114.

When the result of evaluation by the evaluator 111 indicates the normal state, the transmission controller 112 selects the first transmission trigger input from the first frequency-of-transmission calculator 113 (step S13). On the other hand, when the result of evaluation by the evaluator 111 indicates the degraded state, the transmission controller 112 selects the second transmission trigger input from the second frequency-of-transmission calculator 114 (step S14). When selecting the first or the second transmission trigger, the transmission controller 112 outputs a notification frame transmission instruction signal to the wireless transmitter 105.

When receiving the transmission instruction signal, the wireless transmitter 115 generates a notification frame based on own vehicle information. The wireless transmitter 115 instructs the wireless receiver 116 to perform carrier sensing, and receives a carrier sense flag (CS flag) to check the CS flag (step S15). If the CS flag indicates a busy state of carrier, the wireless transmitter 115 reinstructs carrier sensing as required to wait for the next CS flag for the same checking procedure.

If the CS flag indicates an idle state of carrier, the wireless transmitter 115 transmits the notification frame via the antenna 117 (step S16). Thereafter, the process returns to step S12. By repeating the above operation, the wireless device 101 repeatedly transmits notification frames including own vehicle information. The notification frames transmitted by the wireless transmitter 115 are received by the surrounding vehicles and the like.

It may be performed that notification frames of the same contents are transmitted by a plurality of times (for example, a predetermined number of times) in step S16, and then the process returns to step S12. Moreover, the wireless transmitter 115 may receive setting information that specifies the number of times of notification frame transmission from the ECU (upper layer) 301, and transmits notification frames of the same contents by the number of times specified by the setting information.

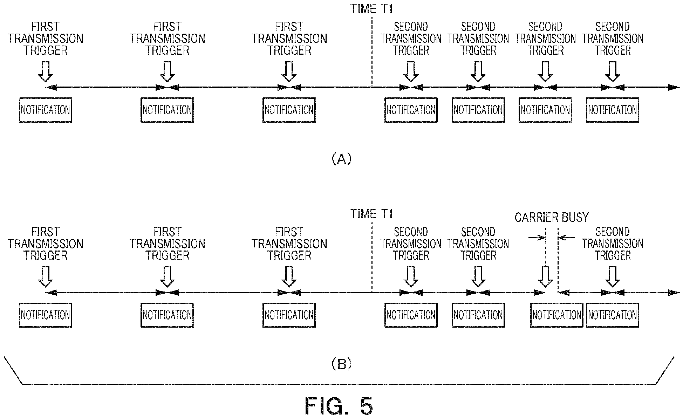

FIGS. 5(A) and FIG. 5(B) show examples of a transmission timing of a notification frame.

In the example of FIG. 5(A), the first transmission triggers are input to the transmission controller 112 at a first time interval (a first frequency). The idle state of carrier is determined at any result of carrier sensing and a notification frame is transmitted correspondingly too each first transmission trigger. At a time T1 after a third of the first transmission trigger is input, an evaluation value representing the degraded state is input to the transmission controller 112. Thereafter, the transmission controller 112 selects the second transmission triggers input from the second frequency-of-transmission calculator 114. From the second frequency-of-transmission calculator 114, the second transmission triggers are input at a second time interval (a second frequency). The idle state of carrier is determined at any result of carrier sensing and a notification frame is transmitted correspondingly to each second transmission trigger. Notification frames transmitted correspondingly to the three first transmission triggers and four second transmission triggers include own vehicle information acquired at different timings.

The example of FIG. 5(B) is the same as the example of FIG. 5(A) up to the stage in which a second of the second transmission trigger is input to transmit a notification frame. A busy state of carrier is determined by carrier sensing when the third of the second transmission trigger is input, which results in a notification frame transmission waiting mode. The idle state of carrier is determined by the next carrier sensing and a notification frame is transmitted at this timing. The idle state of carrier is also determined by further next carrier sensing to transmit a notification frame. Since transmission of the notification frame for the third of the second transmission trigger is delayed, the time interval from the transmission of this notification frame to the transmission of the notification frame for the fourth of the second transmission trigger is shortened. When the carrier sensing is not succeeded for a predetermine period of time or more, the notification frame may be discarded in order to cause a next notification frame is to be transmitted.

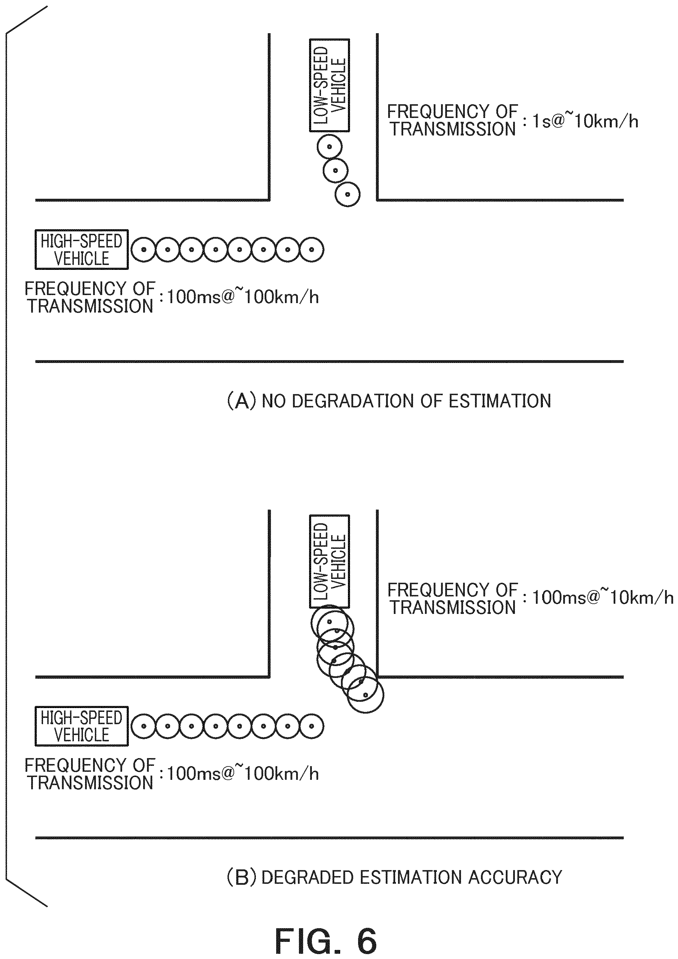

FIGS. 6(A) and 6(B) illustrate situations in which notification frames are transmitted at a crossing (or an intersection). A scene is supposed that a vehicle (high-speed vehicle) running at 100 km/hour goes straight from left to right and a vehicle (low-speed vehicle) running at 10 km/hour turns left.

FIG. 6(A) shows a case where the time synchronization accuracy is in the normal state with a good GPS-signal receiving condition for both of the high- and low-speed vehicles. In each vehicle, the transmission controller 112 selects the first transmission triggers input from the first frequency-of-transmission calculator 113. From the high-speed vehicle, notification frames including high-speed vehicle information are transmitted at a time interval (100 milliseconds) depending on a vehicle speed (100 km/hour) (in the drawing, the notification frames are transmitted eight times as the vehicle travels). From the low-speed vehicle, notification frames including low-speed vehicle information are transmitted at a time interval (one second) depending on a vehicle speed (10 km/hour) (in the drawing, the notification frames are transmitted three times as the vehicle travels). The radius of each circle in the drawing indicates position accuracy. Position accuracy information is included in the notification frames. In this example, the position accuracy is the same for both of the high- and low-speed vehicles. The high- and low-speed vehicles receive each other's vehicle information to detect the presence of each other invisible vehicle due to being hidden in the shadow of the crossing, achieving safe operation support.

FIG. 6(B) shows a case where the time synchronization accuracy is in the degraded state with a bad GPS-signal receiving condition for the low-speed vehicle. The high-speed vehicle is in the same state as in FIG. 6(A). In the low-speed vehicle, the transmission controller 112 selects the second transmission triggers input from the second frequency-of-transmission calculator 114. Therefore, from the low-speed vehicle, the notification frames are transmitted at a time interval (100 milliseconds) shorter than the time interval of FIG. 6(A). Since the position accuracy of the low-speed vehicle is low, the radius of each circle indicating the position accuracy is larger than that of FIG. 6(A). Moreover, due to a short notification frame transmission interval, the circles adjacent to each other partially overlap each other. In the example of the drawing, the notification frame transmission interval of the low-speed vehicle happens to be the same as that of the high-speed vehicle.

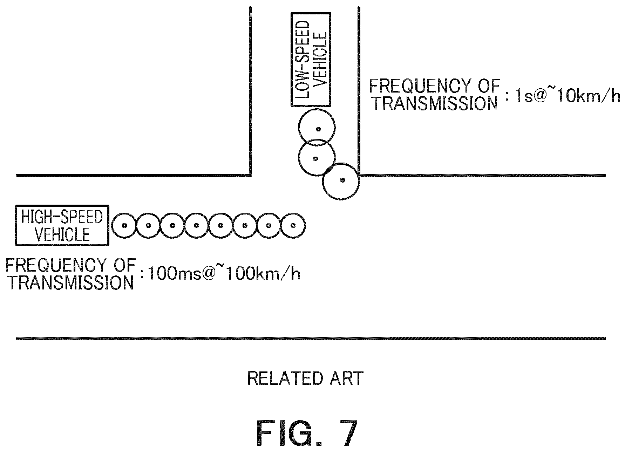

FIG. 7 illustrates a situation in which notification frames are transmitted from a low-speed vehicle according to related art, in the same state as in FIG. 6(B). The GPS-signal receiving condition is bad for the low-speed vehicle, with low time synchronization accuracy, the same as in FIG. 6(B). Even in this state, the notification frames are transmitted from the low-speed vehicle at the same time interval (one second) as in the good receiving condition. The position accuracy of the low-speed vehicle is low, and hence the radius of each circle indicating the position accuracy is large. Even though the estimated accuracy is low, since the frequency of notification frame transmission is also low, notification of information to the surrounding vehicles (in this case, the high-speed vehicle) is insufficient, which is problematic in terms of safe operation support.

Different from the above related art, in the present embodiment, as shown in FIG. 6(B), when the GPS-signal receiving condition is bad, the frequency of notification frame transmission is made higher. The higher frequency of notification frame transmission complements degradation in time synchronization accuracy (degradation of information included in the notification frames).

As described above, in the present embodiment, it is possible to perform continuous safe operation support by increasing the number of information samples (frequency of transmission) to the extent that degradation of information to be transmitted can be compensated in an environment with a bad GPS-signal receiving condition. Moreover, it is possible to evaluate the time synchronization accuracy by making determination based on with a threshold value using the GPS signal strongly related to time information and positon information that are important notification information in operation of ITS (Intelligent Transport Systems). Furthermore, collision of notification frames among vehicles can be avoided by using the transmission triggers and carrier sensing.

In the present embodiment, two types of transmission triggers of the first and second transmission triggers are operated. However, three or more types of transmission triggers can be operated. In this case, time synchronization accuracy may be evaluated in three or more stages (qualities). For three or more qualities, the time interval of notification frames may be shortened in a stepwise manner.

In FIGS. 6 and 7, explanation is made on an assumption of a scene of a crossing. However, the present embodiment can be realized in an environment with a bad GPS-signal receiving condition, such as tunnels and underground parking areas. Moreover, although explanation is made for vehicles, the present embodiment is realized for other apparatuses as long as they are traveling apparatuses. Examples of traveling apparatuses other than vehicles are such as two-wheeled vehicles, personal mobile devices, conveying devices, UAVs, robots, ad also devices carried by pedestrians (such as wearable devices, smartphones, mobile phones, and tablets).

Although, in the present embodiment, each vehicle transmits frames in an autonomous distributed manner based on carrier sensing, each vehicle may transmit frames in another mode. For example, a base station placed in a crossing or the like allocates a time slot to each vehicle within its coverage, and each vehicle may transmit frames in a time divided manner using the allocated slot.

The wireless device of the above-described embodiment may, for example, be realized with a general-purpose computer as basic hardware. In other words, the wireless device can be realized by running a program on a processor mounted in the computer. In this case, the wireless device can be realized with a program that is preinstalled in a computer, stored in a variety of types of storage media, or distributed via a network, the distributed program being installed in a computer, as required. The hardware storage provided in the wireless device can be realized by utilizing, as required, a storage medium such as a memory, a hard disk, CD-R, CD-RW, DVD-RAM, or DVD-R, built in or externally attached to the computer.

The terminology used in the present embodiment should be widely interpreted. For example, the term "processor" may encompass a general-purpose computer, a central processing unit (CPU), a microprocessor, a digital signal processor (DSP), a controller, a microcontroller, a state machine, etc. Depending on the situation, the term "processor" may indicate an application specific integrated circuit, a field programmable gate array (FPGA), a programmable logic device (PLD), etc. The term "processor" may indicate a combination of a plurality of processing apparatuses such as microprocessors, a combination of a DSP and a microprocessor, or one or more microprocessors that cooperate with a DSP core.

As another example, the term "memory" may encompass any electronic component that can store electronic information. The term "memory" may indicate a random access memory (RAM), a read only memory (ROM), a programmable read only memory (PROM), an erasable programmable read only memory (EPROM), an electronically erasable PROM (EEPROM), a nonvolatile random access memory (NVRAM), a flash memory, or a magnetic or optical data storage, each being readable by a processor. When a processor performs information reading from or writing to, or information reading from and writing to a memory, it can be said that the memory electronically communicates with the processor. The memory may be integrated with the processor. Also in this case, it can be said that the memory is electronically communicating with the processor.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A wireless device provided in a traveling apparatus, comprising:
a processor configured to evaluate accuracy of time synchronization in the traveling apparatus; and
a transmitter configured to transmit a frame including information on the traveling apparatus at a first frequency when the accuracy corresponds to a first quality and transmit the frame at a second frequency higher than the first frequency when the accuracy corresponds to a second quality lower than the first quality.

2. The wireless device of claim 1, wherein the processor is configured to calculate the first frequency based on a speed or a travel amount of the traveling apparatus.

3. The wireless device of claim 1 or 2, wherein the processor is configured to acquire setting information via an external interface and calculate the second frequency based on the setting information.

4. The wireless device of any one claims 1 to 3, wherein the accuracy of the time synchronization is time synchronization accuracy of a GPS (Global Positioning System) receiver in provided in the traveling apparatus, the GPS receiver being configured to receive a GPS signal to perform the time synchronization,
wherein the processor is configured to evaluate the accuracy of the time synchronization based on output information of the GPS receiver.

5. The wireless device of claim 4, wherein the processor is configured to compare the output information of the GPS receiver with a threshold value to determine the first quality or the second quality.

6. The wireless device of claim 5, wherein the output information of the GPS receiver includes information on received strength of the GPS signal,
wherein the processor is configured to compare the received strength with the threshold value.

7. The wireless device of any one of claims 1 to 6 wherein the processor is configured to calculate the first frequency based on a speed or a travelling amount of the traveling apparatus;
the processor is configured to acquire setting information via an external interface and calculate the second frequency based on the setting information; and
the processor is configured to generate a first transmission trigger at the first frequency,
the processor is configured to generate a second transmission trigger at the second frequency,
the processor is configured to select the first transmission trigger when the accuracy corresponds to the first quality and select the second transmission trigger when the accuracy corresponds to the second quality, and generate a transmission instruction signal in accordance with selection of the first or the second transmission trigger, and
the transmitter is configured to transmit the frame based on the transmission instruction signal.

8. The wireless device of any one of claims 1 to 7, further comprising a receiver configured to perform carrier sensing on a wireless medium,
wherein the transmitter is configured to transmit the frame when the wireless medium is an idle state.

9. The wireless device of any one of claims 1 to 8, further comprising at least one antenna.

10. A communication method performed in a traveling apparatus, comprising:
estimating accuracy of time synchronization in the traveling apparatus; and
transmitting a frame including information on the traveling apparatus at a first frequency when the accuracy corresponds to a first quality and transmit the frame at a second frequency higher than the first frequency when the accuracy corresponds to a second quality lower than the first quality.

11. The method of claim 10 further comprising calculating the first frequency based on a speed or a travel amount of the traveling apparatus.

12. The method of claim 10 or 11 further comprising acquiring setting information via an external interface and calculate the second frequency based on the setting information.

13. The method of any one of claims 10 to 12, wherein the accuracy of the time synchronization is time synchronization accuracy of a GPS receiver in provided in the traveling apparatus, the GPS receiver being configured to receive a GPS signal to perform the time synchronization,
wherein the accuracy of the time synchronization is evaluated based on output information of the GPS receiver.

14. The wireless device of claim 13, further comparing the output information of the GPS receiver with a threshold value to determine the first quality or the second quality.

15. A non-transitory computer readable storage medium having a program stored therein which causes, when executed by a computer provided in a traveling apparatus, to perform processes of steps comprising:
estimating accuracy of time synchronization in the traveling apparatus; and
transmitting a frame including information on the traveling apparatus at a first frequency when the accuracy corresponds to a first quality and transmit the frame at a second frequency higher than the first frequency when the accuracy corresponds to a second quality lower than the first quality.
